# EUROPÄISCHE PATENTSCHRIFT

(11) **EP 3 627 673 B1**
(45) Veröffentlichungstag und Bekanntmachung des Hinweises auf die Patenterteilung: **26.07.2023**
(21) Anmeldenummer: 18195710.1
(22) Anmeldetag: 20.09.2018
(51) Int. Cl.: H02K 41/03, H02K 11/01, H02K 3/47

(54) **SEGMENTIERTES SEKUNDÄRTEIL FÜR EINEN LINEARMOTOR**
SEGMENTED SECONDARY PART FOR A LINEAR MOTOR
PIÈCE SECONDAIRE SEGMENTÉ POUR UN MOTEUR LINÉAIRE

(43) Veröffentlichungstag der Anmeldung: 25.03.2020
(73) Patentinhaber: ETEL S.A., 2112 Môtiers (CH)
(72) Erfinder: BISCHOFF, Pierre Alexandre, 1148 Mont la ville (CH); MORENO, Loïc, 25390 Guyans-Vennes (FR); SZCZUKIEWICZ, Sylwia, 2013 Colombier (CH); TAMELLINI, Valerio, 2000 Neuchâtel (CH)
(74) Vertreter: Pleyer, Hans Anno

(56) Entgegenhaltungen:
- WO-A1-2004/053270
- WO-A1-2008/148305
- WO-A2-2009/130645
- DE-U1-202012 008 675
- KR-A- 20110 027 313

## Beschreibung

### GEBIET DER TECHNIK

Die vorliegende Erfindung betrifft einen Linearmotor mit segmentierten Sekundärteilen. Die Sekundärteile weisen eine Abschirmung auf, mit dem der Streufluss in der Umgebung der Sekundärteile reduziert wird.

### STAND DER TECHNIK

Linearmotoren mit einem aktiven, mit Spulen versehenen Primärteil und einem passiven, mit Magneten versehenen Sekundärteil sind als Antriebe im Bereich der genauen Positionierung von Maschinenelementen allgegenwärtig. Dabei können die Primärteile einen Eisenkern mit Spulen tragenden Zähnen aufweisen, oder eisenlos ausgeführt sein. Solche eisenlosen Linearmotoren sind für die besonders genaue Positionierung vorteilhaft, da sie wesentlich geringere Rastkräfte und keine Anziehungskräfte zwischen dem Primär- und dem Sekundärteil aufweisen.

Wie alle elektromagnetischen Einrichtungen können solche Linearmotoren unerwünschte magnetische Streufelder erzeugen, die z.B. im Bereich der Elektronenmikroskopie oder der Elektronenstrahllithographie besonders störend wirken, weil solche Streufelder die Elektronen oder allgemein Strahlen von geladenen Partikeln ablenken können.

Aus der US 2010/0171375 A1 ist ein eisenloser Linearmotor bekannt, bei dem beidseits eines beweglichen Primärteils Sekundärteile mit jeweils einer Jochplatte und darauf angebrachten Magneten angeordnet sind. Die Magnete haben in der Bewegungsrichtung des Linearmotors abwechselnde Polarität, wobei sich gegenüberliegende Magnete senkrecht zu den Jochplatten und jeweils in die gleiche Richtung magnetisiert sind. In diesem Dokument werden verschiedene Maßnahmen zur Reduzierung von Streufeldern vorgeschlagen, wie beispielsweise stirnseitige Abdeckplatten und flexible, magnetisch abschirmende Dichtlippen, die das Innere des Stators nur dort öffnen, wo das bewegliche Primärteil aktuell steht. Es ist jedoch sehr aufwändig, so einen Linearmotor in beliebigen und insbesondere großen Längen herzustellen, weil dann viele verschieden lange Sekundärteile und insbesondere auch sehr lange Sekundärteile gefertigt werden müssen.

Aus der EP 2774252 B1 ist ein Linearmotor bekannt, dessen Sekundärteil aus mehreren Segmenten besteht, und der durch Aneinanderreihung mehrerer Segmente in beinahe beliebigen Längen hergestellt werden kann. Dieser Linearmotor weist an den Stoßstellen zwischen den Segmenten überlappende Bereiche auf, die so gefertigt sind, dass durch den Formschluss der beiden Segmente eine Ausrichtung der Segmente zueinander bewirkt wird. Es ist jedoch sehr aufwändig, die jeweiligen Endbereiche der Segmente mit der nötigen Genauigkeit zu bearbeiten. Außerdem können schon kleinste Ungenauigkeiten zu Spalten und Kanten führen, an denen unkontrolliert Streufelder austreten können.

Die WO2008148305A1 offenbart einen Linearmotor, bei dem Magnete von U-förmigen Jochen getragen sind und Joche sich gegenüberliegender Magnete mit einer Nut-Feder-Verbindung verbunden sind.

### ZUSAMMENFASSUNG DER ERFINDUNG

Es ist daher Aufgabe der Erfindung, einen Linearmotor mit einem segmentierten Stator anzugeben, der mit weniger Aufwand zu fertigen ist, und der dennoch eine gute Abschirmung von Streufeldern an Übergängen von einem Segment zum nächsten Segment ermöglicht.

Diese Aufgabe wird gelöst durch eine Vorrichtung gemäß Anspruch 1. Vorteilhafte Details dieser Vorrichtung ergeben sich auch aus den von Anspruch 1 abhängigen Ansprüchen.

Es wird ein segmentiertes Sekundärteil eines Linearmotors offenbart, mit wenigstens zwei Segmenten mit jeweils einer Mehrzahl von auf einer Jochplatte befestigen Magneten abwechselnder Polarität, deren Magnetisierungsrichtung jeweils senkrecht zur Jochplatte ausgerichtet ist. Die Jochplatten weisen einen Überlappungsbereich auf, in dem die Jochplatten benachbarter Segmente in der Magnetisierungsrichtung übereinander liegen, sich aber nicht berühren.

Auf diese Weise sind die Anforderungen an die Fertigungsgenauigkeit der Segmente des Sekundärteils reduziert, da deren Ausrichtung nicht mehr über einen Formschluss im Überlappungsbereich bewerkstelligt wird. Hierzu dienen vielmehr Schrauben und Stifte, die die einzelnen Segmente an einer Maschine ausrichten und fixieren.

Durch die spezielle Ausgestaltung des Überlappungsbereiches der Segmente des Sekundärteils wird dafür gesorgt, dass der magnetische Fluss im Inneren der Segmente konzentriert über einen kleinen Luftspalt mit geringem magnetischen Widerstand übertragen wird, während in weiter außen liegenden Bereichen der Segmente der Luftspalt größer, der Fluss und damit auch der Streufluss kleiner ist. Mit Abschrägungen der den Magneten abgewandt und sich gegenüber liegenden äußeren Kanten der Jochplatten kann hier dieser magnetische Widerstand und damit der austretende Streufluss zusätzlich reduziert werden.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigt
- Figur 1: einen Linearmotor nach dem Stand der Technik,
- Figur 2: Jochplatten eines Sekundärteils in einer 3D-Ansicht,
- Figur 3: Segmente eines Sekundärteils in einer geschnittenen Ansicht,
- Figur 4: eine Vergrößerung des Überlappungsbereiches zwischen zwei Segmenten.

### BESCHREIBUNG DER AUSFÜHRUNGSFORMEN

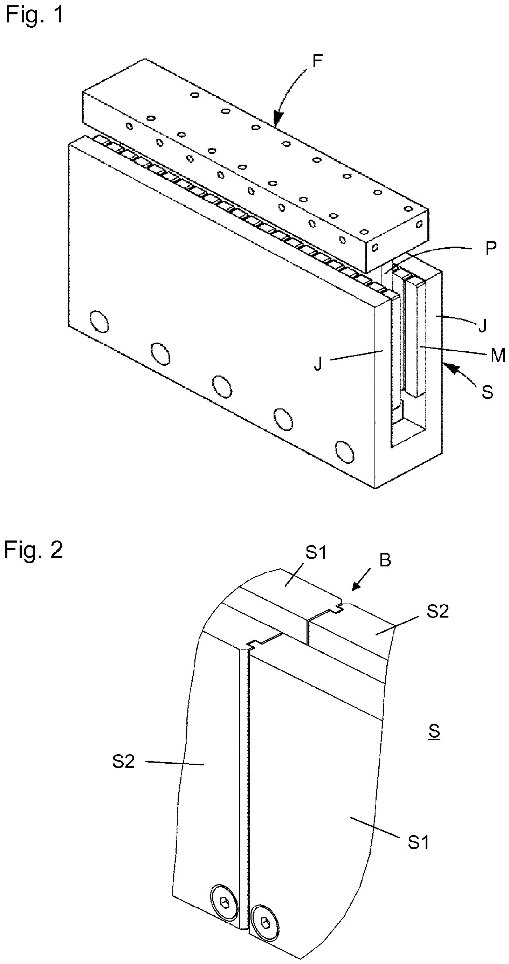

Die Figur 1 zeigt einen Linearmotor nach dem Stand der Technik, mit dem ein Maschinenteil relativ zu einem anderen Maschinenteil bewegt und positioniert werden kann. Zwischen einem Sekundärteil S mit zwei Jochplatten J, die mit Magneten M besetzt sind, bewegt sich ein Primärteil P, das mit einem Montagefuß F verbunden ist. Dieser Montagefuß F ist mit einem der beiden relativ zueinander zu bewegenden Maschinenteile verbunden, während das Sekundärteil S mit dem anderen der beiden Maschinenteile verbunden ist. Die Magnete M weisen in der Bewegungsrichtung des Linearmotors abwechselnde Polarität auf, sich gegenüberliegende Magnete sind in die gleiche Richtung magnetisiert. Im Primärteil P befinden sich Spulen, die über den Montagefuß F mit elektrischer Energie versorgt werden. Fließt ein Strom durch die Spulen, kann eine Kraft erzeugt werden, die das Primärteil P relativ zum Sekundärteil S mit seinen Jochplatten J und Magneten M bewegt. Der gezeigte Aufbau ist typisch für eisenlose Linearmotoren, wie sie häufig zur genauen Positionierung zum Einsatz kommen. Die beidseitige Anordnung von Magneten M erhöht den magnetischen Fluss im Bereich des Primärteils P und damit die Kraft, die der Linearmotor aufbringen kann.

Der in der Figur 1 gezeigte Aufbau wird auch im folgenden Ausführungsbeispiel der Erfindung zugrunde gelegt.

In der Figur 2 ist dargestellt, wie ein solches Sekundärteil S aus mehreren Segmenten S1, S2 aufgebaut werden kann. Durch das Aneinanderreihen mehrerer Segmente S1, S2 können beinahe beliebig lange Sekundärteile S hergestellt werden, ohne hierfür viele verschiedene Bauteile vorhalten zu müssen. Die Magnete M sind in dieser Ansicht weggelassen, sie sind aber in jedem der Segmente S1, S2 wie in der Figur 1 gezeigt angeordnet.

Die vorliegende Erfindung betrifft den Überlappungsbereich B von jeweils zwei benachbarten Segmenten S1, S2. Dieser Bereich wird in den folgenden Figuren näher betrachtet.

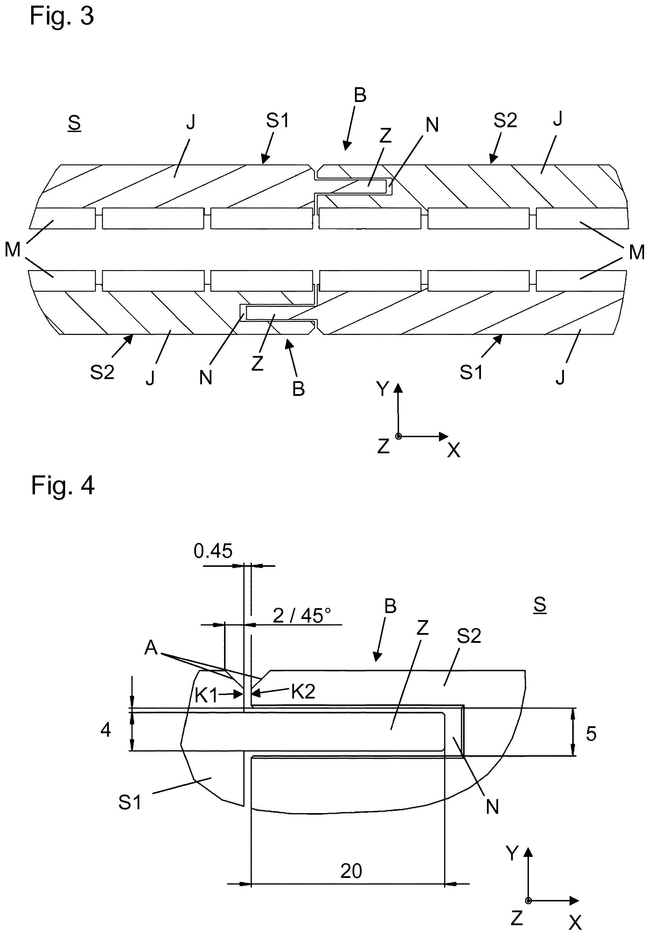

Die Figur 3 zeigt einen Schnitt durch das Sekundärteil S, der sowohl die Bewegungsrichtung X des (nicht dargestellten) Primärteils als auch die Magnetisierungsrichtung Y der Magnete M enthält. Der Schnitt zeigt die Überlappungsbereiche B von je zwei Segmenten S1, S2 des segmentierten Sekundärteils S.

Man erkennt, dass das erste Segment S1 eine Zunge Z aufweist, die in eine Nut N des zweiten Segments S2 ragt. Dadurch liegen die Jochplatten J der Segmente S1, S2 im Überlappungsbereich B übereinander, ein Austritt von Streufluss durch einen Spalt zwischen den beiden Segmenten S1, S2 ist erschwert.

Bevorzugt sind die Zunge Z und die Nut N quaderförmig ausgebildet, da diese Form besonders einfach hergestellt werden kann. Es sind aber auch andere Formen denkbar, beispielsweise mit dreieckigen Querschnitten im X-Y-Schnitt, oder auch eine zweilagige Überlappung wie in der oben zitierten EP 2774252 B1. Auch Überlappungen mit zwei oder mehr Vorsprüngen, die in entsprechende Ausnehmungen ragen, liegen im Rahmen der Erfindung.

Wie vor allem in der in Figur 4 gezeigten Vergrößerung des Überlappungsbereiches B zu erkennen ist, dient dieser Überlappungsbereich B nicht der Ausrichtung der Segmente S1, S2. Vielmehr berühren sich die Segmente S1, S2 nicht, und zwar weder im Überlappungsbereich B noch sonst. Das bedeutet einerseits, dass die Zunge Z und die Nut N mit vergleichsweise großen Toleranzen und damit günstig hergestellt werden können, andererseits sollten die Segmente S1, S2 auf andere Weise zueinander ausgerichtet werden. Die genaue Ausrichtung wird benötigt, weil die regelmäßige Abfolge von Magneten M auch an den Übergängen von einem Segment S1 zum nächsten Segment S2 nicht gestört werden sollte, um unerwünschte Kraftwelligkeiten zu vermeiden. Die Segmente S1, S2 können beispielsweise mit Stiften und Schrauben, die durch exakt ausgerichtete Bohrungen in den Segmenten S1, S2 und im Maschinenteil geführt sind, positioniert und befestigt werden, oder durch an der Maschine vorhandene Anschläge, durch spezielle Montagevorrichtungen, oder auf beliebige andere Weise.

In der Figur 4 erkennt man, dass die beiden Segmente S1, S2 in allen Richtungen X, Y einen Mindestabstand von 0,5 Millimetern einhalten. Auch wenn für den magnetischen Fluss ein möglichst kleiner Abstand wünschenswert wäre, sollte dieser Mindestabstand nicht unter 0,25 Millimeter fallen, da sonst der Herstellungsaufwand bzw. die nötige Bearbeitungsgenauigkeit unnötig steigt. In Y-Richtung, also in der Magnetisierungsrichtung der Magnete M, ist dieser Abstand kleiner als der außen liegende Abstand der Segmente S1, S2 in X-Richtung gewählt, denn durch die Zunge Z und die Nut N sind hier große Flächen (in der X-Z-Ebene) im Inneren des Überlappungsbereichs B gebildet. Große Flächen mit kleinem Abstand weisen einen geringeren magnetischen Widerstand auf als kleinere Flächen mit größerem Abstand, so dass der magnetische Fluss im Inneren des Überlappungsbereiches B konzentriert wird, und damit weniger Streufluss in der Umgebung der Segmente S1, S2 des Sekundärteils S auftritt. Der Abstand in X-Richtung an den außen liegenden Stoßstellen zwischen den Segmenten S1, S2 kann beispielsweise 0,75 Millimeter betragen.

Dieser magnetische Widerstand an den außen liegenden, in Z-Richtung verlaufenden Kanten K1, K2 (die im Sinne dieser Anmeldung noch zum Überlappungsbereiche B zählen) kann noch weiter erhöht werden, wenn die den Magneten M abgewandten und sich gegenüberliegenden Längskanten K1, K2 zweier benachbarter Jochplatten J jeweils eine Abschrägung A aufweisen, die beispielsweise je zwei Millimeter Material in X- und Y-Richtung abtragen und somit einen 45° Winkel bilden. Ein Bereich von 35° - 55° für diese Abschrägung A ist bevorzugt. Da magnetische Feldlinien immer senkrecht zur Oberfläche austreten, verlängert sich hier der Weg, den der magnetische Fluss über den Luftspalt zurücklegen muss, und damit der magnetische Widerstand im Bereich der Kanten K1, K2 bzw. der Abschrägungen A. Somit wird ein größerer Anteil des Flusses im Inneren des Überlappungsbereiches B übertragen, und der Streufluss reduziert.

Die Erfindung eignet sich für Sekundärteile S von eisenlosen Linearmotoren mit einseitiger oder wie gezeigt beidseitiger Anordnung von Magnetbahnen, aber auch für Sekundärteile S von eisenbehafteten Linearmotoren.

## Patentansprüche

1. Linearmotor mit einem Primärteil (P) und zwei sich gegenüberliegenden segmentierten Sekundärteilen (S), mit jeweils wenigstens zwei Segmenten (S1, S2), wobei die Segmente (S1, S2) der Sekundärteile (S) jeweils in einer Bewegungsrichtung (X) des Primärteils (P) aneinandergereiht sind, wobei die Segmente (S1, S2) mit jeweils einer Mehrzahl von auf einer Jochplatte (J) befestigen Magneten (M) abwechselnder Polarität versehen sind, deren Magnetisierungsrichtung (Y) jeweils senkrecht zur Jochplatte (J) ausgerichtet ist, wobei sich jeweils zwei der Segmente (S1, S2) gegenüberliegen, so dass die Magnete (M) einander zugewandt und sich jeweils mit identischer Magnetisierungsrichtung (Y) gegenüberliegen, und dass zwischen den Magneten (M) das als eisenlos ausgebildete Primärteil (P) beweglich geführt ist, wobei die Jochplatten (J) der Segmente (S1, S2) einen Überlappungsbereich (B) aufweisen, in dem die Jochplatten (J) benachbarter Segmente (S1, S2) in der Magnetisierungsrichtung (Y) übereinander liegen, wobei der Überlappungsbereich (B) zweier benachbarter Segmente (S1, S2) eine vorspringende Zunge (Z) am einen Segment (S1) und eine Nut (N) am anderen Segment (S2) umfasst, wobei im montierten Zustand die Zunge (Z) in die Nut (N) ragt, **dadurch gekennzeichnet, dass** sich die Jochplatten (J) zweier benachbarter Segmente (S1, S2) weder im Überlappungsbereich (B) noch sonst wo berühren, um einen magnetischen Fluss im inneren der Segmente (S1, S2) im Inneren des Überlappungsbereiches (8) zu konzentrieren und über einen Luftspalt zu übertragen.

2. Linearmotor nach Anspruch 1, **dadurch gekennzeichnet, dass** die Zunge (Z) quaderförmig ausgebildet ist.

3. Linearmotor nach einem der vorhergehenden Ansprüche, **dadurch gekennzeichnet, dass** zwischen zwei benachbarten Segmenten (S1, S2) und deren Jochplatten (J) in allen Richtungen ein Abstand von mindestens 0,25 mm, vorzugsweise mindestens 0,5 mm eingehalten wird.

4. Linearmotor nach Anspruch 3, **dadurch gekennzeichnet, dass** der Abstand zwischen der Nut (N) und der Zunge (Z) in der Magnetisierungsrichtung (Y) kleiner ist als der Abstand von den Magneten (M) abgewandten und sich gegenüberliegenden Längskanten (K1, K2) zweier benachbarter Jochplatten (J) in einer Richtung (X) senkrecht zur Magnetisierungsrichtung (Y).

5. Linearmotor nach Anspruch 4, **dadurch gekennzeichnet, dass** die den Magneten (M) abgewandten und sich gegenüberliegenden Längskanten (K1, K2) eine Abschrägung (A) aufweisen.

6. Linearmotor nach Anspruch 5, **dadurch gekennzeichnet, dass** die Abschrägung (A) einen Winkel im Bereich von 35° bis 55° aufweist und vorzugsweise bei 45° liegt.

## Claims

1. Linear motor with a primary part (P) and two segmented secondary parts (S) which lie opposite one another, with in each case at least two segments (S1, S2), the segments (S1, S2) of the secondary parts (S) being lined up in each case in a movement direction (X) of the primary part (P), the segments (S1, S2) being provided in each case with a plurality of magnets (M) which are fastened on a yoke plate (J), have an alternating polarity, and the magnetization direction (Y) of which is oriented in each case perpendicularly with respect to the yoke plate (J), in each case two of the segments (S1, S2) lying opposite one another, with the result that the magnets (M) face one another and lie opposite one another in each case with an identical magnetization direction (Y), and that the primary part (P) of ironless configuration is guided movably between the magnets (M), the yoke plates (J) of the segments (S1, S2) having an overlapping region (B), in which the yoke plates (J) of adjacent segments (S1, S2) lie above one another in the magnetization direction (Y), the overlapping region (B) of two adjacent segments (S1, S2) comprising a projecting tongue (Z) on the one segment (S1) and a groove (N) on the other segment (S2), the tongue (Z) protruding into the groove (N) in the assembled state, **characterized in that** the yoke plates (J) of two adjacent segments (S1, S2) do not make contact with one another either in the overlapping region (B) or anywhere else, in order to concentrate a magnetic flux in the interior of the segments (S1, S2) in the interior of the overlapping region (8) and to transmit it across an air gap.

2. Linear motor according to Claim 1, **characterized in that** the tongue (Z) is of cuboid configuration.

3. Linear motor according to either of the preceding claims, **characterized in that** a spacing of at least 0.25 mm, preferably at least 0.5 mm, is maintained between two adjacent segments (S1, S2) and their yoke plates (J) in all directions.

4. Linear motor according to Claim 3, **characterized in that** the spacing between the groove (N) and the tongue (Z) in the magnetization direction (Y) is smaller than the spacing of longitudinal edges (K1, K2), facing away from the magnets (M) and lying opposite one another, of two adjacent yoke plates (J) in a direction (X) perpendicularly with respect to the magnetization direction (Y).

5. Linear motor according to Claim 4, **characterized in that** the longitudinal edges (K1, K2) which face away from the magnets (M) and lie opposite one another have a chamfer (A).

6. Linear motor according to Claim 5, **characterized in that** the chamfer (A) has an angle in the range from 35° to 55° and preferably lies at 45°.

## Revendications

1. Moteur linéaire avec une partie primaire (P) et deux parties secondaires (S) segmentées opposées, avec respectivement au moins deux segments (S1, S2), les segments (S1, S2) des parties secondaires (S) étant respectivement alignés dans une direction de déplacement (X) de la partie primaire (P), les segments (S1, S2) étant respectivement munis d'une pluralité d'aimants (M) de polarité alternée fixés sur une plaque de culasse (J), dont la direction d'aimantation (Y) est respectivement orientée perpendiculairement à la plaque de culasse (J), deux des segments (S1, S2) étant respectivement en face l'un de l'autre, de telle sorte que les aimants (M) sont tournés l'un vers l'autre et sont respectivement en face l'un de l'autre avec une direction d'aimantation (Y) identique, et que la partie primaire (P) réalisée sous forme non ferreuse est guidée de manière mobile entre les aimants (M), les plaques de culasse (J) des segments (S1, S2) présentant une zone de chevauchement (B) dans laquelle les plaques de culasse (J) de segments voisins (S1, S2) sont superposées dans la direction d'aimantation (Y), la zone de chevauchement (B) de deux segments voisins (S1, S2) comprenant une languette en saillie (Z) sur un segment (S1) et une rainure (N) sur l'autre segment (S2), la languette (Z) faisant saillie dans la rainure (N) à l'état monté, **caractérisé en ce que** les plaques de culasse (J) de deux segments voisins (S1, S2) ne sont en contact ni dans la zone de chevauchement (B) ni ailleurs, afin de concentrer un flux magnétique à l'intérieur des segments (S1, S2) à l'intérieur de la zone de chevauchement (8) et de le transmettre à travers un entrefer.

2. Moteur linéaire selon la revendication 1, **caractérisé en ce que** la languette (Z) est réalisée sous forme parallélépipédique.

3. Moteur linéaire selon l'une quelconque des revendications précédentes, **caractérisé en ce qu'**une distance d'au moins 0,25 mm, de préférence d'au moins 0,5 mm, est maintenue dans toutes les directions entre deux segments voisins (S1, S2) et leurs plaques de culasse (J).

4. Moteur linéaire selon la revendication 3, **caractérisé en ce que** la distance entre la rainure (N) et la languette (Z) dans la direction d'aimantation (Y) est inférieure à la distance entre des bords longitudinaux (K1, K2) détournés des aimants (M) et se faisant face de deux plaques de culasse (J) voisines dans une direction (X) perpendiculaire à la direction d'aimantation (Y).

5. Moteur linéaire selon la revendication 4, **caractérisé en ce que** les bords longitudinaux (K1, K2) détournés des aimants (M) et se faisant face présentent un biseautage (A).

6. Moteur linéaire selon la revendication 5, **caractérisé en ce que** le biseautage (A) présente un angle dans la plage allant de 35° à 55° et de préférence de 45°.
